# FASCICULE DE BREVET EUROPEEN

(11) **EP 0 443 921 B1**
(45) Date de publication et mention de la délivrance du brevet: **13.09.1995**
(21) Numéro de dépôt: 91400396.7
(22) Date de dépôt: 15.02.1991
(51) Int. Cl.: H04N 7/00

(54) **Procédé de traitement des données numériques de contrôle associées à un signal vidéo de type HD-MAC**
Verarbeitungsverfahren von digitalen Kontrolldaten, die mit einem HD-MAC-Videosignal verbunden sind
Method of processing digital control data associated to an HD-MAC video signal

(30) Priorité: 23.02.1990 FR 9002259
(43) Date de publication de la demande: 28.08.1991
(73) Titulaire: LABORATOIRE EUROPEEN DE RECHERCHES ELECTRONIQUES AVANCEES, SOCIETE EN NOM COLLECTIF, 92400 Courbevoie (FR)
(72) Inventeur: Tran, Francis, F-92045 Paris la Défense (FR)
(74) Mandataire: Ruellan-Lemonnier, Brigitte

(56) Documents cités:
- EP-A- 0 342 756
- EP-A- 0 349 454
- EP-A- 0 386 805
- US-A- 4 789 860

## Description

La présente invention concerne un procédé de traitement des données numériques de contrôle associées à un signal vidéo de type HD-MAC ainsi qu'un dispositif pour la mise en oeuvre de ce procédé.

Le problème général rencontré lors de la transmission du signal vidéo en télévision haute définition réside dans le fait que les canaux de transmission sont trop étroits. Ainsi, dans le cas d'un signal vidéo de type HD-MAC, une réduction de largeur de bande d'un facteur d'environ 4 doit être obtenue. Pour réaliser cette transmission, les participants au projet Eurêka ont mis au point un système de réduction de largeur de bande qui se montre performant, car il réalise un bon compromis entre la restitution d'une très bonne résolution de l'image (définition spatiale) et une restitution temporelle de l'image. Le principe retenu consiste à adapter le mode de compression à la résolution temporelle de l'image qu'il faut transmettre. Selon le standard choisi, on utilise trois modes de compression possibles appelés 80 ms, 20 ms, 40 ms, chaque mode préservant la résolution spatiale, la résolution temporelle de l'image ou réalisant un compromis des deux. Dans ce cas, on utilise donc un traitement adaptatif du signal vidéo. Pour réaliser ce traitement, il est nécessaire de transmettre en plus du signal vidéo proprement dit des données numériques de contrôle contenant des informations de synchronisation et des informations sur le type de traitement à effectuer telles que des données vecteur-mouvement ou des données sur le mode de transmission, ces informations étant généralement appelées assistance digitale et référencées informations DATV (pour Digitally-Assisted-Television en langue anglaise ). En conséquence, les récepteurs doivent pouvoir décoder ces données numériques de contrôle pour pouvoir traiter le signal vidéo de type HD-MAC.

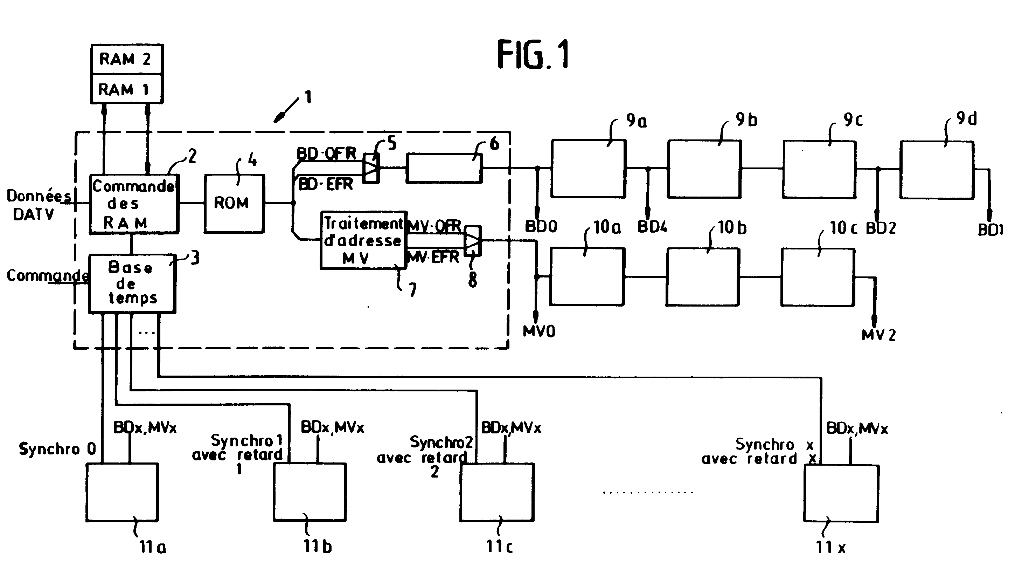

Les données DATV associées à un signal vidéo de type HD-MAC sont donc décodées dans un système de décodage tel que représenté sur la figure 1. Comme décrit notamment dans les articles de IEE Conférence Publication 293 en 1988, les données d'assistance digitale comportent plus particulièrement des données indiquant le mode de transmission utilisé ou données de décision de branche référencées "BD" et des données vecteur-mouvement référencées "MV". L'ensemble de ces données est codé sur 11 bits et elles concernent un bloc d'image. Comme représenté sur la figure 1, le dispositif de décodage comporte deux mémoires référencées RAM1, RAM2, chaque mémoire étant susceptible de stocker les données DATV correspondant à une période de traitement, à savoir à une image paire et une image impaire. Pour le cas envisagé ci-dessus, chaque mémoire présente une capacité d'au moins 6480 mots de 11 bits. Comme représenté sur la figure 1, ces deux mémoires sont reliées au décodeur 1 proprement dit. Le décodeur 1 comporte un circuit de commande des mémoires RAM1 et RAM2 qui reçoit en entrée les données DATV et qui gère le fonctionnement des mémoires RAM1 et RAM2 en lecture et en écriture comme cela sera décrit ci-après. Le décodeur 1 comporte aussi une base de temps 3 qui est reliée au circuit de commande 2 et reçoit un signal de commande. La base de temps émet différents signaux de synchronisation référencés respectivement SYNCHRO O, SYNCHRO 1, SYNCHRO 2, ..., SYNCHRO X vers des circuits de traitement extérieurs au décodeur. D'autre part, le décodeur 1 comporte une mémoire ROM (Read only memory en langue anglaise) 4 dans laquelle est stockée une table de décodage. Cette mémoire 4 est connectée en sortie du circuit de commande 2. En sortie de la mémoire 4 est connecté un multiplexeur 5 qui reçoit en entrée les données de décision de branche BD contenues dans les données DATV. Il reçoit respectivement les données de décision de branche BD de l'image impaire référencées BD-OFR et les données de décision de branche de l'image paire référencées BD-EFR et il donne en sortie une information de décision de branche décodée qui est envoyée sur un circuit à retard 6 compensant le retard dû au traitement des autres données DATV comme cela sera expliqué en détail ci-après. On obtient donc en sortie du circuit 6 une information de décision de branche non retardée référencée BDO. D'autre part, la sortie de la mémoire ROM4 est connectée à un circuit de traitement d'adresse des données vecteur-mouvement MV. Ce circuit donne en sortie les données vecteur-mouvement correspondant à l'image paire et référencées MV-EFR et les données vecteur-mouvement correspondant à l'image impaire et référencées MV-OFR. Ces données sont multiplexées dans le multiplexeur 8 de manière à obtenir en sortie la donnée vecteur-mouvement non retardée MVO. En fait, les données DATV codées sur une période de traitement correspondant à une image paire et à une image impaire, soit 80ms, sont transmises 80ms avant le signal vidéo correspondant. Ceci explique l'utilisation de deux mémoires RAM1 et RAM2 qui sont alternativement utilisées en mode lecture et en mode écriture. Ainsi, durant le traitement des données DATV préalablement stockées dans la mémoire RAM1 qui fonctionne alors en mode lecture, les données DATV de la période de traitement suivante sont emmagasinées dans la mémoire RAM2 qui fonctionne en mode écriture. Avec ce dispositif de décodage, on obtient donc en sortie du décodeur les données de décision de branche décodées BDO sur deux bits, et les données vecteur-mouvement décodées MVO sur 8 bits. Toutefois, ces données BDO et MVO doivent être retardées, car le circuit de traitement de signal vidéo appelé décodeur de réduction de bande passante utilise aussi les données BD4, BD2, BD1 qui sont retardées respectivement de 20ms, 60ms, 80ms par rapport à BDO et la donnée MV2 qui est retardée de 60ms par rapport à MVO pour réaliser le traitement convenable du signal vidéo en fonction du mode de compression utilisé. Comme représenté sur la figure 1, ce retard s'effectue en utilisant des circuits à retard tels que des mémoires de trame qui peuvent fournir des retards de 20ms ou plus. Ces mémoires sont référencées 9a, 9b, 9c, 9d et 10a, 10b, 10c sur la figure 1. En conséquence, en sortie de la mémoire 9a, on obtient la donnée de décision de branche BD4, en sortie de la mémoire 9c on obtient la donnée de décision de branche BD2 et en sortie de la mémoire 9d on obtient la donnée de décision de branche BD1, tandis qu'en sortie du circuit 10c on obtient la donnée vecteur-mouvement MV2.

D'autre part, comme représenté sur la figure 1, en plus des données d'assistance digitale BDX et MVX, le décodeur 1 doit aussi générer plusieurs versions décalées dans le temps des signaux de synchronisation. Ces signaux de synchronisation peuvent comporter notamment des informations de synchronisation-ligne, de parité-ligne, de parité-trame, de parité-image. Ces signaux de synchronisation avec leur retard spécifique doivent être connectés à différents circuits dans le dispositif de traitement du signal vidéo. Les retards peuvent varier de quelques cycles d'horloge (37ns) à plusieurs périodes lignes (32µs). En conséquence, comme représenté sur la figure 1, la transmission de tous ces signaux en parallèle nécessite un nombre d'interconnexions important sur le circuit imprimé. De plus, les circuits à retard sont réalisés à l'aide de circuits intégrés supplémentaires, ce qui entraîne un coût élevé pour la réalisation de l'ensemble du dispositif de décodage.

Pour remédier à cet inconvénient, on a proposé dans la demande de brevet Européen EP-A-0 386 805 au nom de Philips publié le 12 Septembre 1990 un procédé permettant de sortir les données de décision de branche et de vecteur-mouvement en parallèle.

La présente invention a pour but de proposer un nouveau procédé de traitement des données numériques de contrôle associées à un signal vidéo de type HD-MAC basé sur le même principe ainsi qu'un nouveau dispositif pour la mise en oeuvre de ce procédé.

En conséquence, la présente invention a pour objet un procédé de décodage des données numériques de contrôle associées à un signal vidéo de type HD-MAC, caractérisé en ce qu'il comporte les étapes suivantes :
- stockage des données numériques de contrôle correspondant à N avec N ≧ 2 périodes de traitement, chaque période de traitement correspondant à la transmission de deux images respectivement paire et impaire, les données numériques de contrôle comprenant des données vecteur-mouvement et des données décision de branche ;
- sortie en parallèle des données vecteur-mouvement correspondant à une première période de traitement ;
- sortie en parallèle des données vecteur-mouvement correspondant à une deuxième période de traitement ;
- traitement des données vecteur-mouvement ci-dessus de manière à obtenir en parallèle des premières données vecteur-mouvement non retardées et des secondes données vecteur-mouvement retardées ;
- traitement des données de décision de branche des première et seconde périodes de traitement de manière à sortir en parallèle et en synchronisme avec les données vecteur-mouvement des premières données de décision de branche non retardées et des décisions de branche retardées en fonction des contraintes HD-MAC.

Selon un mode de réalisation préférentiel de la présente invention, le stockage des données numériques de contrôle est réalisé dans n + 1 mémoires gérées par permutation circulaire, une des mémoires étant en mode écriture tandis que les autres mémoires sont en mode lecture. Selon une autre caractéristique de la présente invention, les données numériques de contrôle obtenues en sortie du décodeur ainsi que les données de synchronisation sont transmises vers des circuits de traitement par l'intermédiaire d'au moins un bus série comportant deux lignes-signal d'un bit. Ceci permet de diminuer le nombre de sorties prévues sur le circuit imprimé de réalisation du dispositif de décodage. En effet, les informations de synchronisation ainsi que les données d'assistance digitales sont envoyées successivement vers les circuits de traitement qui en ont besoin avec leur retard propre, lesdits circuits générant eux-mêmes le retard des signaux de synchronisation.

La présente invention concerne aussi un dispositif pour la mise en oeuvre du procédé ci-dessus.

Conformément à la présente Invention, ce dispositif comporte trois mémolres susceptibles de stocker chacune les données numériques de contrôle relative à une période de traitement, un circuit de commande des mémoires recevant les données numériques de contrôle (DATV) et gérant les mémoires par permutation circulaire, une base de temps reliée au circuit de commande et générant des signaux de synchronisation, une table de décodage connectée en sortie du circuit de commande, un circuit de verrouillage connecté en sortie de la table de décodage, un premier circuit de traitemeut d'adresse connecté en sortie de la table de décodage et délivrant en parallèle les données vecteur-mouvement d'une image paire et d'une image impaire correspondant à une première période de traitement, un deuxième circuit de traitement d'adresse connecté en sortie du circuit de verrouillage et délivrant en parallèle les données vecteur-mouvement d'une image paire et d'une image impaire correspondant à une deuxième période de traitement, un multiplexeur recevant des données vecteur-mouvement issues des deux circuits de traitement d'adresse et délivrant en parallèle les données vecteur-mouvement non retardées et retardée de 60 ms, un multiplexeur recevant en entrée de la table de décodage et du circuit de verrouillage respectivement les données de décision de branche d'une image paire et d'une image impaire correspondant aux deux périodes de traitement successives et un circuit à retard connecté en sortie du multiplexeur et délivrant en parallèle les données de décision de branche non retardées et retardées respectivement de 80, 60 et 20 ms.

Selon une autre caractéristique, le dispositif ci-dessus comporte de plus un circuit de formattage de bus-série recevant en entrée les données de décision de branche décodées non retardées et retardées de 80, 60 et 20 ms et les données vecteur-mouvement non retardées et retardée de 60 ms ainsi que les informations de synchronisation et les envoyant en série sur au moins un bus constitué de deux lignes-signal d'un bit.

D'autres caractéristiques et avantages de la présente invention apparaîtront à la lecture de la description faite ci-après d'un mode de réalisation préférentiel d'un dispositif de décodage mettant en oeuvre le procédé de traitement conforme à la présente invention, cette description étant faite avec référence aux dessins ci-annexés dans lesquels :
- la figure 1 déjà décrite est un schéma synoptique d'un dispositif de décodage selon l'art antérieur;
- la figure 2 est un schéma synoptique d'un dispositif de décodage conforme à la présente invention ;
- la figure 3 est un schéma expliquant le procédé de traitement des données numériques de contrôle associé à un signal vidéo de type HD-MAC réalisé dans le dispositif de figure 2, et
- la figure 4 est un schéma donnant le diagramme des temps d'un bus-série à deux lignes.

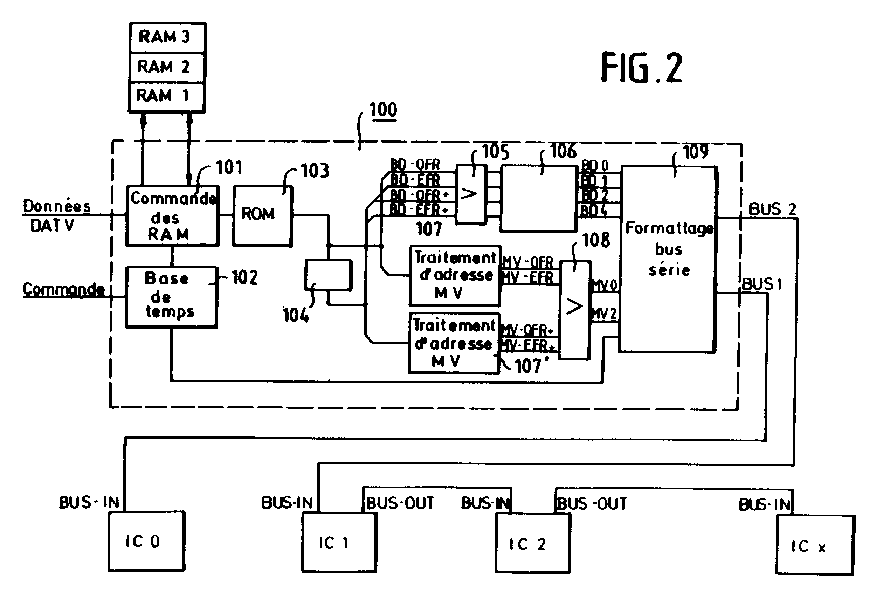

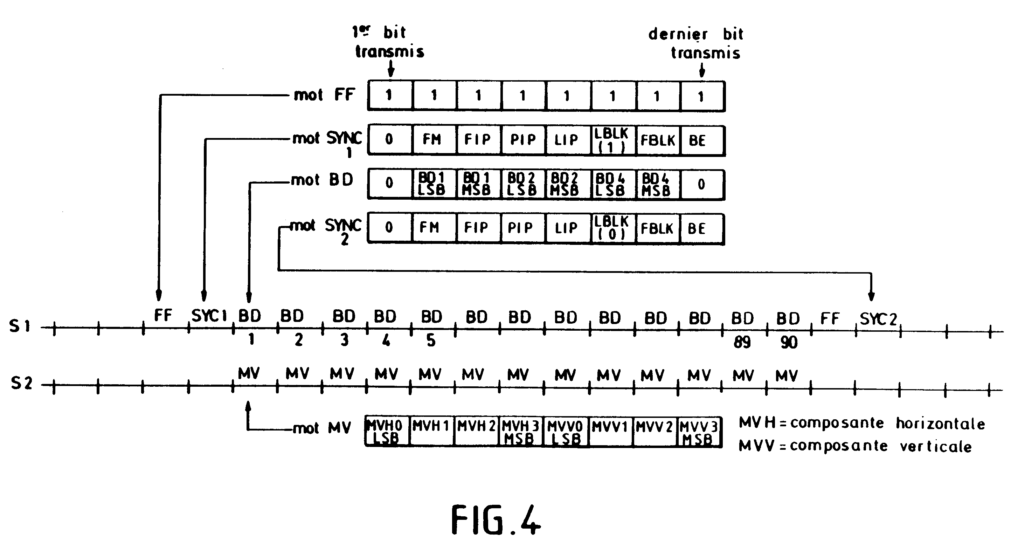

On décrira maintenant avec référence à la figure 2 un mode de réalisation préférentiel d'un dispositif de décodage des données numériques de contrôle DATV associées à un signal vidéo de type HD-MAC conforme à la présente invention. Ainsi, ce dispositif de décodage comporte trois mémoires RAM1, RAM2, RAM3 destinées à stocker les informations numériques de contrôle correspondant à deux périodes de 80ms. De préférence, chaque mémoire RAM1, RAM2 ou RAM3 présente une capacité d'au moins 6480 mots de 11 bits. Le stockage des données numériques de contrôle DATV correspondant à deux périodes de 80ms permet d'obtenir en parallèle les informations numériques de contrôle décodées BD0, BD1, BD2, BD4, et MV0, MV2 comme cela sera expliqué de manière plus détaillée ci-après. D'autre part, le décodeur 100 lui-même comporte un circuit 101 de commande des mémoires RAM sensiblement identique au circuit de commande des mémoires RAM du décodeur de la figure 1. Ce circuit de commande des mémoires RAM reçoit en entrée les données DATV et gère par permutation circulaire les mémoires RAM1, RAM2, RAM3. Le circuit 101 de commande des mémoires RAM est connecté à une base de temps 102 qui reçoit des signaux de commande ou horloge et envoit des signaux de synchronisation vers différents circuits. De plus, le décodeur 100 comporte une table de décodage stockée dans une mémoire ROM 103. Cette mémoire 103 est connectée en sortie du circuit 101 de commande des mémoires RAM. La mémoire 103 est reliée à un circuit de verrouillage 104. Le décodeur 100 comporte de plus un premier multiplexeur 105 qui reçoit en entrée des données de décision de branche des images paire et impaire (BD-EFR* et BD-OFR*) issues du circuit de verrouillage 104 ainsi que les données de décision de branche des images paire et impaire (BD-EFR et BD-OFR) issues directement de la table de décodage 103. La sortie du multiplexeur 105 est envoyée sur un circuit à retard 106 compensant les retards résultant du traitement d'autres données et donne en sortie les données de décision de branche avec les retards spécifiques souhaités BD0, BD1, BD2, BD4. D'autre part, le décodeur 100 comporte deux circuits de traitement d'adresse vecteur-mouvement MV 107 et 107′. Le circuit 107 est connecté directement en sortie de la table de décodage 103 tandis que le circuit 107′ est connecté en sortie du circuit de verrouillage 104. Ces circuits de traitement 107 et 107′ donnent en sortie les données vecteur-mouvement correspondant aux images paire et impaire de la première période de traitement référencées MV-EFR* et MV-OFR* pour le circuit 107′ et les données vecteur-mouvement correspondant aux images paire et impaire de la seconde période de traitement référencées MV-EFR et MV-OFR pour le circuit de traitement 107. Les données vecteur-mouvement MV-OFR*, MV-EFR*, MV-OFR, MV-EFR sont envoyées en entrée d'un multiplexeur 108 donnant en sortie les données vecteur-mouvement MV0 et MV2. D'autre part, conformément à la présente invention, l'ensemble des données numériques de contrôle avec leur retard spécifique BD0, BD1, BD2, BD4, MV0, MV2 ainsi que les informations de synchronisation issues de la base de temps 102 sont envoyées sur un circuit 109 de formattage de bus-série qui permet d'envoyer sur deux bus-série BUS 1 et BUS 2 constitués chacun de deux lignes signal d'un bit, les données numériques de contrôle nécessaires vers différents circuits de traitement du signal vidéo référencés respectivement IC0, IC1, IC2, ..., ICX. Comme représenté sur la figure 2, les informations transmises par le bus-série BUS 1 sont envoyées vers le circuit de traitement IC0. En fait, le bus-série BUS 1 transmet uniquement les données numériques de contrôle BD0 et MV0 vers le circuit IC0. En ce qui concerne la ligne référencée BUS 2 constituée de deux lignes-signal d'un bit S1 et S2, elle transmet l'ensemble des autres données numériques de contrôle ainsi que des informations de synchronisation vers les autres circuits de traitement du signal vidéo IC1, IC2 ... ICX. Le type de codage utilisé pour cette transmission sera expliqué avec référence à la figure 4.

De manière spécifique, la ligne signal S1 est utilisée pour la transmission des données numériques de contrôle BD1, BD2, BD4 et de signaux codés sur 8 bits. La séquence de transmission sur la base d'une ligne HDTV de 32µs peut être, à titre illustratif, celle représentée sur la figure 4. Le premier mot transmis sur la ligne S1 est un mot FF. Le mot FF est un mot spécifique qui signifie que le mot suivant est un mot de synchronisation. Il peut être codé sous la forme 11111111.

Le second mot transmis sur S1 est le mot SYC1 qui est un mot de synchronisation. Ce mot comporte un premier bit mis à "0" suivi de 7 bits donnant des informations, notamment sur le début d'une ligne, la fin d'une ligne et la parité d'une image comme représenté sur la figure 4. Ensuite sur la ligne S1 seront transmis 90 mots successifs contenant les données de décision de branche BD relatives à une image, chaque mot BD comportant les données BD1, BD2, BD4 et commençant par un bit "0". A la fin des 90 mots BD est transmis un second mot FF puis un mot de synchronisation SYC2 fournissant notamment des informations de fin de lignes. D'autre part, comme représenté sur la figure 4, sur la ligne S2, on transmet les données relatives au vecteur-mouvement MV2 sous forme de mots de 8 bits en phase avec les données BD. Le mot MV comporte des informations sur les composantes horizontales MVH et les composantes verticales MVV d'un mot vecteur-mouvement MV.

Comme représenté sur la figure 2, le bus série BUS 2 est connecté en entrée du circuit IC1 sur l'entrée référencée BUS-IN puis les informations envoyées sur le bus-série BUS 2 se propagent à travers les autres circuits IC2, ..., ICX en étant connectés entre les sorties BUS-OUT et les entrées BUS-IN de ces circuits. De ce fait, chaque circuit est responsable de la sortie du bus-série et transmet les données circulant sur le bus-série BUS 2 vers le circuit suivant avec un retard propre correspondant à son propre retard. Ainsi, les données DATV fournies par le bus série sont toujours en phase avec les données vidéo.

L'utilisation de ce bus série pour la transmission des données numériques de contrôle DATV décodées diminue de manière significative le nombre de sorties sur le décodeur DATV 100 ainsi que le nombre d'interconnexions sur le circuit imprimé. La propagation du bus série d'un circuit à un autre en phase avec les données vidéo simplifie aussi le dessin d'interface entre le décodeur DATV et tous les autres circuits, comme représenté sur la figure 2.

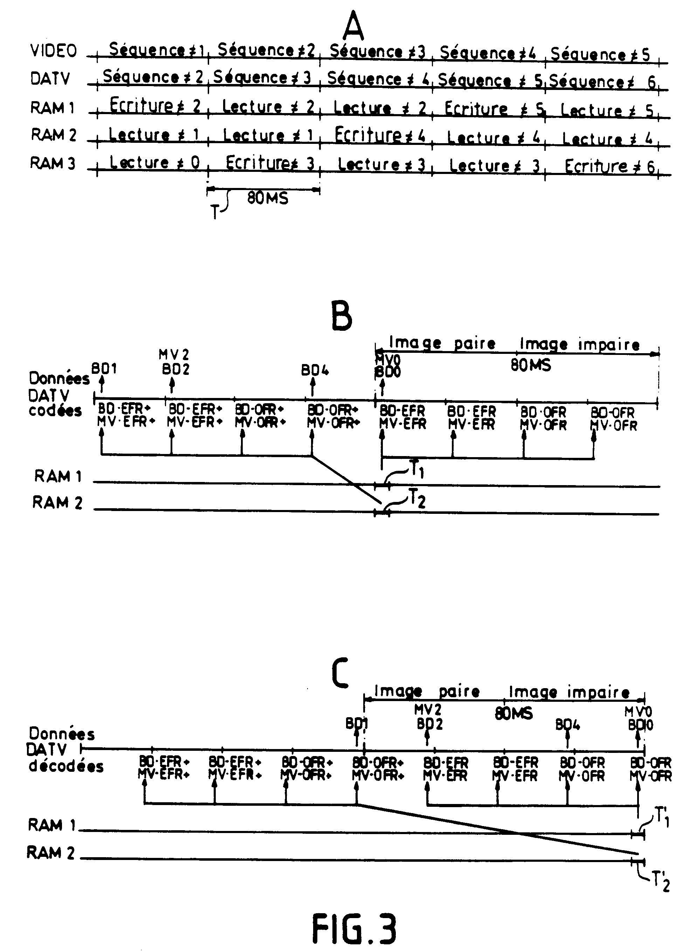

On décrira maintenant, avec référence à la figure 3, de manière un peu plus détaillée le fonctionnement du décodeur de la figure 2. Comme représenté sur la figure 3, lorsque les signaux vidéo sont envoyées selon des séquences 1, 2, 3, 4, 5, les données numériques de contrôle associées sont envoyées selon les séquences 2, 3, 4, 5, 6. En effet les données numériques de contrôle associées à une séquence vidéo précèdent ladite séquence vidéo. Les données numériques de contrôle DATV sont inscrites dans les mémoires RAM1, RAM2, RAM3 gérées par permutation circulaire de la manière représentée sur le diagramme des temps de la figure 3a. Ainsi, lorsque la RAM1 est en mode écriture pour recevoir les données numériques de contrôle DATV relatives à la séquence 2, les mémoires RAM2 et RAM3 sont en mode lecture et permettent la lecture des données numériques de contrôle DATV relatives respectivement à la séquence 1 et à la séquence 0. Ensuite, lorsque la mémoire RAM1 est en mode lecture pour les données numériques de contrôle DATV relatives à la séquence 2, la mémoire RAM2 est toujours en mode lecture de manière à fournir les données relatives à la séquence 1 et la mémoire RAM3 passe en mode écriture de manière à enregistrer les données relatives à la séquence 3 et ainsi de suite comme représenté sur le diagramme des temps de la figure 3A. On a représenté sur les figures 3B et 3C un exemple de données DATV décodées permettant d'obtenir l'ensemble des données numériques de contrôle souhaité avec leur retard spécifique. On décrira maintenant en se référant aux figures 3B et 3D comment décoder les données DATV correspondant à la séquence vidéo 2 référencé T sur la figure 3A. Cette séquence 2 correspond à une image paire et à une image impaire et présente une durée de 80ms. Dans ce cas, la mémoire RAM1 contient les 6480 mots codés correspondant aux données numériques de contrôle de la séquence 2. Le cycle T1 représenté sur la figure 3B correspond au cycle de lecture du mot 1 dans la mémoire RAM1. Le décodage de ce mot fournit les données numériques de contrôle de décision de branche BD et de vecteur-mouvement MV relatives à la séquence 2. De même, la mémoire RAM2 contient les 6480 mots codés des données numériques de contrôle DATV relatives à la séquence 1. Ce cycle référencé T2 représente le cycle lecture du mot 1 dans la mémoire RAM2. Le décodage de ce mot fournit les données numériques de contrôle relatives à la séquence 1. En sélectionnant de manière convenable les informations décodées ci-dessus, toutes les versions nécessaires des données de décision de branche BD et de vecteur-mouvement MV peuvent être obtenues. AInsi, dans le cas de la figure 3B, l'on a BD0 = BD-EFR, BD1= BD-EFR*, BD2 = BD-EFR*, BD4 = BD-OFR*, MVO = MV-EFR, MV2 = MV-EFR*.

On décrira maintenant avec référence à la figure 3C le mécanisme utilisé pour obtenir les données numériques de contrôle BD et MV à la fin de la séquence 2. Dans ce cas, le cycle T′1 représente le cycle de lecture du 6480 ème mot dans la mémoire RAM1. Le décodage de ce mot fournit les données BD et MV relatives à la séquence 2. De même le cycle T′2 représente le cycle de lecture du 6480 ème mot dans la RAM2. Le décodage de ce mot fournit des données numériques de contrôle BD et MV relatives à la séquence 1. Dans ce cas aussi en sélectionnant de manière appropriée les données numériques ci-dessus, toutes les versions de BD et MV peuvent être obtenues : ainsi, BD0 = BD-OFR, BD1 = BD-OFR*, BD2 = BD-EFR, BD4 = BD-OFR, MV0 = MV-OFR, et MV2 = MV-EFR.

Les exemples ci-dessus représentent les deux cas extrêmes à savoir le début et la fin de la séquence 2. Tout autre cas intermédiaire peut être décodé en utilisant le même mécanisme. Dans tous les cas, les données DATV provenant de deux séquences successives sont nécessaires pour obtenir toutes les versions retardées des données DB et MV comme on le voit clairement sur les figures 3B et 3C.

L'utilisation du décodeur permet donc de supprimer les circuits à retard tels que les mémoires de trame de 20ms utilisés dans le circuit de décodage de l'art antérieur. Ces circuits sont remplacés par une seule mémoire RAM2 de 6480 mots de 11 bits ce qui diminue de manière importante le coût du circuit.

## Revendications

1. Procédé de décodage des données numériques de contrôle associées à un signal vidéo de type HD-MAC, caractérisé en ce qu'il comporte les étapes suivantes :
- stockage des données numériques de contrôle correspondant à N avec N ≧ 2 périodes de traitement, chaque période de traitement correspondant à la transmission de deux images respectivement paire et impaire, les données numériques de contrôle comprenant des données vecteur-mouvement et des données décision de branche ;
- sortie en parallèle des données vecteur-mouvement correspondant à une première période de traitement ;
- sortie en parallèle des données vecteur-mouvement correspondant à une deuxième période de traitement ;
- traitement des données vecteur-mouvement ci-dessus de manière à obtenir en parallèle des premières données vecteur-mouvement non retardées et des secondes données vecteur-mouvement retardées ;
- traitement des données de décision de branche des première et seconde périodes de traitement de manière à sortir en parallèle et en synchronisme avec les données vecteur-mouvement des premières données de décision de branche non retardées et des données de décision de branche retardées en fonction des contraintes HD-MAC.

2. Procédé selon la revendication 1, caractérisé en ce que le stockage des données numériques de contrôle est réalisé dans N + 1 mémoires gérées par permutation circulaire, une des mémoires étant en mode écriture tandis que les autres mémoires sont en mode lecture.

3. Procédé selon la revendication 2, caractérisé en ce que chaque mémoire a une capacité de 6480 mots de 11 bits.

4. Procédé selon la revendication 1, caractérisé en ce que les données de décision de branche et les données vecteur-mouvement sont constituées respectivement par les données de décision de branche non retardées (BDO) et retardées respectivement de 20ms (BD4), 60ms (BD2) et 80ms (BD1) et par les données vecteur-mouvement non retardées (MV0) et retardées de 60ms (MV2).

5. Procédé selon l'une quelconque des revendications 1 à 4, caractérisé en ce que les données numériques de contrôle avec leur retard spécifique et les données de synchronisation sont transmises vers des circuits de traitement par l'intermédiaire d'au moins un bus série comportant deux lignes-signal d'1 bit.

6. Procédé selon la revendication 5, caractérisé en ce qu'une première ligne sert à la transmission des données de décision de branche retardées (BD1, BD2, BD4) et de données de synchronisation et l'autre ligne sert à la transmission des données vecteur-mouvement retardées (MV2).

7. Procédé selon la revendication 6, caractérisé en ce que la séquence de transmission de la première ligne est basée sur une ligne HDTV (pour télévision haute définition)-et comporte un mot spécifique, un premier mot de synchronisation, 90 mots de décision de branche (BD) incluant chacun les données de décision de branche retardées de 80ms (BD1), 60ms (BD2) et 20ms (BD4), un second mot spécifique et un deuxième mot de synchronisation.

8. Procédé selon l'une quelconque des revendications 5 à 7, caractérisé en ce que les données de décision de branche non retardées (BD0) et vecteur-mouvement non retardées (MV0) sont transmises vers les circuits de traitement concernés par l'intermédiaire d'un second bus-série comportant deux lignes-signal d'1 bit.

9. Dispositif pour la mise en oeuvre du procédé selon l'une quelconque des revendications 1 à 8, caractérisé en ce qu'il comporte trois mémoires (RAM1, RAM2, RAM3) susceptibles de stocker chacune les données numériques de contrôle relative à une période de traitement, un circuit (101) de commande des mémoires recevant les données numériques de contrôle (DATV) et gérant les mémoires par permutation circulaire, une base de temps (102) reliée au circuit de commande et générant des signaux de synchronisation, une table de décodage (103) connectée en sortie du circuit de commande, un circuit de verrouillage (104) connecté en sortie de la table de décodage, un premier circuit de traitement d'adresse (107) connecté en sortie de la table de décodage et délivrant en parallèle les données vecteur-mouvement (MV) d'une image paire et d'une image impaire correspondant à une première période de traitement, un deuxième circuit de traitement d'adresse (107′) connecté en sortie du circuit de verrouillage (104) et délivrant en parallèle les données vecteur-mouvement en parallèle les données vecteur-mouvement (MV) d'une image paire et d'une image impaire correspondant à une deuxième période de traitement, un multiplexeur recevant des données vecteur-mouvement (MV) issues des deux circuits de traitement d'adresse et délivrant en parallèle les données vecteur-mouvement non retardées (MV0) et retardées de 60ms (MV2), un multiplexeur recevant en entrée de la table de décodage et du circuit de verrouillage respectivement les données de décision de branche (BD) d'une image paire et d'une image impaire correspondant aux deux périodes de traitement successives et un circuit à retard (106) connecté en sortie du multiplexeur et délivrant en parallèle les données (BD0, BD1, BD2 et BD4) de décision de branche non retardées et retardées respectivement de 80ms, 60ms et 20ms.

10. Dispositif selon la revendication 9, caractérisé en ce qu'il comporte de plus un circuit de formattage de bus-série recevant en entrée les données de décision de branche décodées non retardées (BD0) et retardées de 80ms (BD1), de 60ms (BD2), de 20ms (BD4) et les données vecteur-mouvement décodées non retardées (MV0) et retardées de 60ms (MV2) ainsi que les informations de synchronisation et les envoyant en série sur au moins un bus constitué de deux lignes-signal d'un bit.

## Patentansprüche

1. Verfahren für die Dekodierung der digitalen Kontrolldaten, die mit einem HD-MAC-Videosignal verbunden sind, dadurch gekennzeichnet, daß es die folgenden Schritte umfaßt:
- Speicherung der digitalen Kontrolldaten, die N mit N ≧ 2 Verarbeitungsperioden entsprechen, wobei jede Verarbeitungsperiode der Übertragung von zwei Halbbildern entspricht, von denen jeweils eines geradzahlig und eines ungeradzahlig ist, wobei die digitalen Kontrolldaten Bewegungsvektordaten und Verzweigungsentscheidungsdaten umfassen;
- parallele Ausgabe der einer ersten Verarbeitungsperiode entsprechenden Bewegungsvektordaten;
- parallele Ausgabe der einer zweiten Verarbeitungsperiode entsprechenden Bewegungsvektordaten;
- Verarbeitung der obenerwähnten Bewegungsvektordaten in der Weise, daß parallel erste, nicht verzögerte Bewegungsvektordaten und zweite, verzögerte Bewegungsvektordaten erhalten werden;
- Verarbeitung der Verzweigungsentscheidungsdaten der ersten und der zweiten Verarbeitungsperiode in der Weise, daß parallel und synchron mit den Bewegungsvektordaten erste, nicht verzögerte Verzweigungsentscheidungsdaten und verzögerte Verzweigungsentscheidungsdaten entsprechend den HD-MAC-Erfordernissen ausgegeben werden.

2. Verfahren nach Anspruch 1, dadurch gekennzeichnet, daß die Speicherung der digitalen Kontrolldaten in N + 1 Speichern erfolgt, die durch zyklische Permutation verwaltet werden, wobei sich einer der Speicher im Schreibmodus befindet, während sich die anderen Speicher im Lesemodus befinden.

3. Verfahren nach Anspruch 2, dadurch gekennzeichnet, daß jeder Speicher eine Kapazität von wenigstens 6480 11-Bit-Wörtern aufweist.

4. Verfahren nach Anspruch 1, dadurch gekennzeichnet, daß die Verzweigungsentscheidungsdaten und die Bewegungsvektordaten aus den unverzögerten (BD0) und den um 20 ms (BD4), 60 ms (BD2) bzw. 80 ms (BD1) verzögerten Verzweigungsentscheidungsdaten bzw. aus den unverzögerten (MV0) und den um 60 ms verzögerten (MV2) Bewegungsvektordaten bestehen.

5. Verfahren nach einem der Ansprüche 1 bis 4, dadurch gekennzeichnet, daß die digitalen Kontrolldaten mit ihrer spezifischen Verzögerung und die Synchronisationsdaten über wenigstens einen seriellen Bus, der zwei 1-Bit-Signalleitungen aufweist, zu Verarbeitungsschaltungen übertragen werden.

6. Verfahren nach Anspruch 5, dadurch gekennzeichnet, daß eine erste Leitung für die Übertragung der verzögerten Verzweigungsentscheidungsdaten (BD1, BD2, BD4) und von Synchronisationsdaten verwendet wird und die andere Leitung für die Übertragung der verzögerten Bewegungsvektordaten (MV2) verwendet wird.

7. Verfahren nach Anspruch 6, dadurch gekennzeichnet, daß die Übertragungsfolge der ersten Leitung auf einer HDTV-Zeile (für hochauflösendes Fernsehen) basiert und ein spezifisches Wort, ein erstes Synchronisationswort, 90 Verzweigungsentscheidungswörter (BD), von denen jedes die um 80 ms (BD1), 60 ms (BD2) und 20 ms (BD4) verzögerten Verzweigungsentscheidungsdaten einschließt, ein zweites spezifisches Wort und ein zweites Synchronisationswort umfaßt.

8. Verfahren nach einem der Ansprüche 5 bis 7, dadurch gekennzeichnet, daß die unverzögerten Verzweigungsentscheidungsdaten (BD0) und unverzögerten Bewegungsvektordaten (MV0) über einen zweiten seriellen Bus, der zwei 1-Bit-Signalleitungen aufweist, zu den betreffenden Verarbeitungsschaltungen übertragen werden.

9. Gerät für die Realisierung des Verfahrens nach einem der Ansprüche 1 bis 8, dadurch gekennzeichnet, daß es drei Speicher (RAM1, RAM2, RAM3) umfaßt, von denen jeder in der Lage ist, die zu einer Verarbeitungsperiode gehörenden digitalen Kontrolldaten zu speichern, eine Steuerschaltung (101) der Speicher, welche die digitalen Kontrolldaten ( DATV) empfängt und die Speicher durch zyklische Permutation verwaltet, ein Zeitbasisgerät (102), das mit der Steuerschaltung verbunden ist und Synchronisationssignale erzeugt, eine Dekodiertabelle (103), die mit dem Ausgang der Steuerschaltung verbunden ist, eine Verriegelungsschaltung (104), die mit dem Ausgang der Dekodiertabelle verbunden ist, eine erste Adressenverarbeitungsschaltung (107), die mit dem Ausgang der Dekodiertabelle verbunden ist und parallel die Bewegungsvektordaten (MV) eines geradzahligen Halbbildes und eines ungeradzahligen Halbbildes, die einer ersten Verarbeitungsperiode entsprechen, liefert, eine zweite Adressenverarbeitungsschaltung (107′), die mit dem Ausgang der Verriegelungsschaltung (104) verbunden ist und parallel die Bewegungsvektordaten (MV) eines geradzahligen Halbbildes und eines ungeradzahligen Halbbildes, die einer zweiten Verarbeitungsperiode entsprechen, liefert, einen Multiplexer, der Bewegungsvektordaten (MV) empfängt, die von den zwei Adressenverarbeitungsschaltungen kommen, und parallel die unverzögerten (MV0) und um 60 ms verzögerten (MV2) Bewegungsvektordaten liefert, einen Multiplexer, der als Eingang von der Dekodiertabelle bzw. von der Verriegelungsschaltung die Verzweigungsentscheidungsdaten (BD) eines geradzahligen Halbbildes und eines ungeradzahligen Halbbildes empfängt, die den zwei aufeinanderfolgenden Verarbeitungsperioden entsprechen, und eine Verzögerungsschaltung (106), die mit dem Ausgang des Multiplexers verbunden ist und parallel die unverzögerten und die um 80, 60 bzw. 20 ms verzögerten Verzweigungsentscheidungsdaten (BD0, BD1, BD2 und BD4) liefert.

10. Gerät nach Anspruch 9, dadurch gekennzeichnet, daß es außerdem eine Formatierungsschaltung für einen seriellen Bus umfaßt, die als Eingang die dekodierten unverzögerten (BD0) und die um 80 ms (BD1), 60 ms (BD2) und 20 ms (BD4 verzögerten Verzweigungsentscheidungsdaten und die dekodierten unverzögerten (MV0) und die um 60 ms verzögerten (MV2) Bewegungsvektordaten sowie die Synchronisationsinformationen empfängt und sie seriell an mindestens einen Bus schickt, der aus zwei Ein-Bit-Signalleitungen besteht.

## Claims

1. Method for the decoding of digital control data associated with an HD-MAC type video signal, characterized in that it includes the following steps:
- storage of the digital control data corresponding to N with N ≧ 2 processing periods, each processing period corresponding to the transmission of two frames, respectively even and odd, the digital control data comprising motion vector data and branch decision data;
- parallel output of the motion vector data corresponding to a first processing period;
- parallel output of the motion vector data corresponding to a second processing period;
- processing of the above motion vector data so as to obtain, in parallel, first undelayed motion vector data and second delayed motion vector data;
- processing of the branch decision data of the first and second processing periods so as to output, in parallel and in synchronism with the motion vector data, first undelayed branch decision data and branch decision data delayed in accordance with the HD-MAC constraints.

2. Method according to Claim 1, characterized in that the storage of the digital control data is done in N + 1 memories managed by circular permutation, one of the memories being in writing mode while the other memories are in reading mode.

3. Method according to Claim 2, characterized in that each memory has a capacity of 6480 11-bit words.

4. Method according to Claim 1, characterized in that the branch decision data and the motion vector data are constituted respectively by the undelayed branch decision data (BD0) and the branch decision data delayed respectively by 20 ms (BD4), 60 ms (BD2) and 80 ms (BD1), and by the undelayed motion vector data (MV0) and the motion vector data delayed by 60 ms (MV2).

5. Method according to any one of Claims 1 to 4, characterized in that the digital control data with their specific delay and the synchronization data are transmitted to processing circuits by means of at least one serial bus having two 1-bit signal lines.

6. Method according to Claim 5, characterized in that a first line is used for the transmission of the delayed branch decision data (BD1, BD2, BD4) and of the synchronization data, and the other line is used for transmission of the delayed motion vector data (MV2).

7. Method according to Claim 6, characterized in that the transmission sequence of the first line is based on an HDTV (high-definition television) line and has a specific word, a first synchronization word, 90 branch decision words (BD), each including the branch decision data delayed by 80 ms (BD1), 60 ms (BD2), and 20 ms (BD4), a second specific word and a second synchronization word.

8. Method according to Claims 5 to 7, characterized in that the undelayed branch decision data (BD0) and the undelayed motion vector data (MV0) are transmitted to the concerned processing circuits by means of a second serial bus including two 1-bit signal lines.

9. Device for the implementation of the method according to any one of Claims 1 to 8, characterized in that it includes three memories (RAM1, RAM2, RAM3), each of which is capable of storing the digital control data relating to a processing period, a memory control circuit (101) receiving the digital control data (DATV) and managing the memories by circular permutation, a time base (102) connected to the control circuit and generating synchronization signals, a decoding table (103) connected to the output of the control circuit, a latching circuit (104) connected to the output of the decoding table, a first address processing circuit (107) connected to the output of the decoding table and delivering, in parallel, the motion vector data (MV) of an even frame and of an odd frame corresponding to a first processing period, a second addressing-processing circuit (107′) connected to the output of the latching circuit (104) and delivering, in parallel, the motion vector data, in parallel the motion vector data (MV) [sic] of an even frame and of an odd frame corresponding to a second processing period, a multiplexer receiving motion vector data (MV) coming from the two address processing circuits and delivering, in parallel, the undelayed motion vector data (MV0) and the motion vector data delayed by 60 ms (MV2), a multiplexer receiving as input from the decoding table and from the latching circuit respectively, the branch decision data (BD) of an even frame and of an odd frame corresponding to the two successive processing periods, and a delay circuit (106) connected to the output of the multiplexer and delivering, in parallel, the branch decision data (BD0, BD1, BD2 and BD4) undelayed and delayed by 80 ms, 60 ms and 20 ms respectively.

10. Device according to Claim 9, characterized in that it respectively further includes a serial bus formatting circuit receiving, as input, the undelayed decoded branch decision data (BD0) and the decoded branch decision data delayed by 80 ms (BD1), 60 ms (BD2) and 20 ms (BD4) and the undelayed decoded motion vector data (MV0) and the decoded motion vector data delayed by 60 ms (MV2) as well as synchronization information and sending it in series to at least one bus constituted by two onebit signal lines.
